# EUROPEAN PATENT SPECIFICATION

(11) **EP 4 199 194 B1**
(45) Date of publication and mention of the grant of the patent: **29.07.2026**
(21) Application number: 22820536.5
(22) Date of filing: 07.06.2022
(51) Int. Cl.: H01M 10/6567, H01M 10/6556, H01M 10/613, H01M 10/625, H01M 50/296, H01M 50/249, H01M 10/48, H01M 50/529, H01M 50/547

(54) **BATTERY MODULE, AND BATTERY PACK AND VEHICLE INCLUDING SAME**
BATTERIEMODUL UND BATTERIEPACK SOWIE FAHRZEUG DAMIT
MODULE DE BATTERIE ET BLOC-BATTERIE, ET VÉHICULE LES COMPRENANT

(30) Priority: 08.06.2021 KR 20210074426
(43) Date of publication of application: 21.06.2023
(73) Proprietor: LG Energy Solution, Ltd., Seoul 07335 (KR)
(72) Inventor: JU, Eun-Ah, Daejeon 34122 (KR); YUN, Hyeon-Ki, Daejeon 34122 (KR); TANNENBERGER, Guenter, 85123 Pobenhausen (DE); JANKE, Jan, 74336 Brackenheim (DE); HARASZTOSI, Uwe, 74172 Neckarsulm (DE)
(74) Representative: Goddar, Heinz J.
(86) International application number: PCT/KR2022/008027
(87) International publication number: WO 2022/260408

(56) References cited:
- EP-A1- 4 167 350
- EP-A1- 4 191 752
- JP-A- 2014 022 151
- KR-A- 20170 049 655
- KR-A- 20180 041 063
- KR-A- 20190 064 887
- KR-A- 20200 001 781
- KR-B1- 101 447 062

## Description

### TECHNICAL FIELD

The present disclosure relates to a battery module, and a battery pack and a vehicle including the same, and more specifically, to a battery module having a structure in which an insulating cooling liquid flowing into a module housing to cool a battery cell comes into direct contact with parts such as an electrode lead and a bus bar of the battery cell to realize efficient cooling and it is possible to prevent the insulating cooling liquid from leaking, and a battery pack and a vehicle including the same.

### BACKGROUND ART

In the case of a battery module that uses indirect water cooling using a cooling water, the cooling performance is limited because the cooling water does not directly contact a battery cell but indirectly contacts the battery cell through a module housing that houses the battery cell. In addition, since the battery module using the indirect water cooling must include a cooling device such as a separate heatsink provided outside the module housing to form a flow path for cooling, the overall volume of the battery module is inevitably increased, which inevitably causes loss in terms of energy density.

In order to solve the problem of the indirect water cooling method, it is required to develop a battery module having a cooling structure in which an insulating cooling liquid is directly introduced into the module housing to come into direct contact with the battery cell.

In the case of a battery module having a direct cooling structure using this insulating cooling liquid, it is important to develop a flow path structure for efficient cooling, but also, it is very important to maintain airtightness so that the insulating cooling liquid does not leak to the outside of the module housing and the end plate.

In particular, in the case of a battery module having a structure in which a pair of outer terminals functioning as high potential terminals of the battery module are exposed to the outside of the sealing plate and the end plate, for the electrical connection between the outer terminal located outside the sealing plate and the inner terminal located inside the sealing plate, there is no choice but to have a structure in which a part of the sealing plate is perforated. Therefore, there is a risk that the insulating cooling liquid inside the module housing may leak through the perforated portion of the sealing plate, and it is required to develop a sealing structure that can effectively prevent such leakage at the perforated portion of the sealing plate. JP 2014 022151 discloses an arrangement for fixing terminals to a battery housing by a stud inserted into a terminal hole formed in the a sealing plate, and a terminal spacer interposed between an inner surface of the terminal hole and the stud.

### DISCLOSURE

### Technical Problem

The present disclosure is designed to solve the problems of the related art, and therefore the present disclosure is directed to providing a battery module having a structure in which an insulating cooling liquid is introduced into the battery module and comes into contact with an electrode lead, a bus bar, an inner terminal and a battery cell to realize efficient cooling, and it is possible to prevent the insulating cooling liquid from leaking.

However, the technical problems to be solved by the present disclosure are not limited to the above-described problems, and other problems not mentioned will be clearly understood by those skilled in the art from the present disclosure described below.

### Technical Solution

A battery module according to an embodiment of the present disclosure to solve the above problem comprises: a sub module including a cell stack assembly having a plurality of battery cells; a module housing configured to accommodate the sub module; a front sealing plate configured to cover an opening at one longitudinal side of the module housing and having an inlet through which a cooling liquid is introduced; a rear sealing plate configured to cover an opening at the other longitudinal side of the module housing and having an outlet through which the cooling liquid is discharged; and a pair of terminal assemblies including an outer terminal located at an outer side of the front sealing plate, a stud inserted into a terminal hole formed in the front sealing plate, and a terminal spacer interposed between an inner surface of the terminal hole and the stud.

The terminal assembly has a leakage prevention structure so that the insulating cooling liquid introduced into the battery module does not leak through a gap formed between the stud and the terminal spacer and a gap formed between the inner surface of the terminal hole and the terminal spacer.

The sub module may include a front bus bar frame assembly coupled to one longitudinal side of the cell stack assembly; and a rear bus bar frame assembly coupled to the other longitudinal side of the cell stack assembly.

The front bus bar frame assembly may include a bus bar frame; a plurality of bus bars fixed on the bus bar frame and connected to an electrode lead of the battery cell; and a pair of inner terminals fixed on the bus bar frame and connected to an electrode lead of a battery cell located at an outermost side among the battery cells included in the cell stack assembly.

The terminal assembly may further include a fastening nut bolted to the stud so that the outer terminal comes into close contact with the terminal spacer.

The stud may be coupled to the inner terminal, and the terminal spacer may be bolted to the stud.

The front sealing plate may include a stepped portion formed on the inner surface of the terminal hole. Also, the terminal spacer may include a spacer flange portion formed at a position corresponding to the stepped portion.

A sealing member may be interposed between the stepped portion and the spacer flange portion.

The stud may pass through the inner terminal. Also, the stud may include a stud flange portion formed at one end thereof.

A sealing member may be interposed in at least one place between the stud flange portion and the inner terminal and between the inner surface of the terminal hole and the terminal spacer.

The terminal spacer may be coupled to the inner terminal. Also, the stud may be bolted to the terminal spacer, and thus the outer terminal may come into close contact with the terminal spacer.

A sealing member may be interposed between the inner surface of the terminal hole and the terminal spacer.

The terminal spacer may be coupled to the inner terminal. Also, the stud may be inserted into a stud groove formed in a center portion of the terminal spacer and bolted to the terminal spacer, and thus the outer terminal comes into close contact with the terminal spacer.

The front sealing plate may include a stepped portion formed on the inner surface of the terminal hole. Also, the terminal spacer may include a spacer flange portion formed at a position corresponding to the stepped portion.

A sealing member may be interposed between the stepped portion and the spacer flange portion.

Meanwhile, a battery pack and a vehicle according to an embodiment of the present disclosure comprises the battery module according to an embodiment of the present disclosure as described above.

### Advantageous Effects

According to one aspect of the present disclosure, the insulating cooling liquid may flow into the battery module and directly cool the inside of the battery module, thereby allowing efficient and rapid cooling and preventing the insulating cooling liquid from leaking out of the battery module.

According to another aspect of the present disclosure, it is possible to prevent the sensing line and the temperature sensor provided for sensing the voltage and temperature of the battery cell from being damaged by the insulating cooling liquid flowing inside the battery module, and to enable accurate temperature measurement by minimizing the influence of the insulating cooling liquid in measuring the temperature of the battery cell.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a complete perspective view showing a battery module according to an embodiment of the present disclosure.
FIG. 2 is an exploded perspective view showing a battery module according to an embodiment of the present disclosure.
FIG. 3 is a view showing a cross-section, taken along the line A-A' of FIG. 1.
FIGS. 3a and 3b are diagrams showing a part of a cross section, taken along the line A-A' of FIG. 1 and illustrating other forms of the flow path spacer shown in FIG. 3.
FIG. 3c is a view showing a part of a cross section, taken along line A-A' of FIG. 1, and is a view showing a cross section of a battery module to which a cooling fin is applied instead of the flow path spacer shown in FIGS. 3 to 3a.
FIG. 4 is a view showing a state in which the front end plate and the front sealing plate are removed in the battery module shown in FIG. 1.
FIGS. 5 and 6 are views showing the flow of the insulating cooling liquid for cooling in the battery module of the present disclosure to which the flow path spacer is applied.
FIG. 7 is a diagram showing a coupling structure of a bus bar frame and a flow path spacer according to the present disclosure.
FIGS. 8 and 9 are views showing a specific structure of a terminal assembly according to the present disclosure.
FIGS. 9a to 9c are views showing a terminal assembly of a different form from the terminal assembly shown in FIG. 9.
FIG. 10 is a diagram showing an arrangement structure of a sensing assembly in the battery module of the present disclosure to which the flow path spacer is applied.
FIG. 11 is a diagram showing an arrangement structure of a sensing assembly in the battery module of the present disclosure to which a cooling fin is applied.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure.

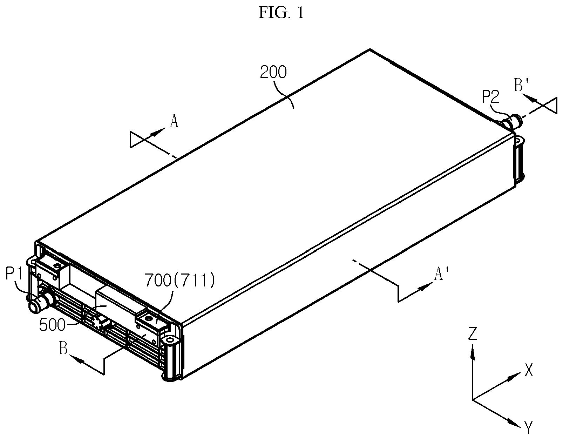

Referring to FIGS. 1, 2 and 4, the battery module according to an embodiment of the present disclosure includes a sub module 100, a module housing 200, a front sealing plate 300, a rear sealing plate 400 and a pair of terminal assemblies 700. The battery module may further include a front end plate 500 and/or a rear end plate 600 and/or a sensing assembly 800 in addition to the above-described components.

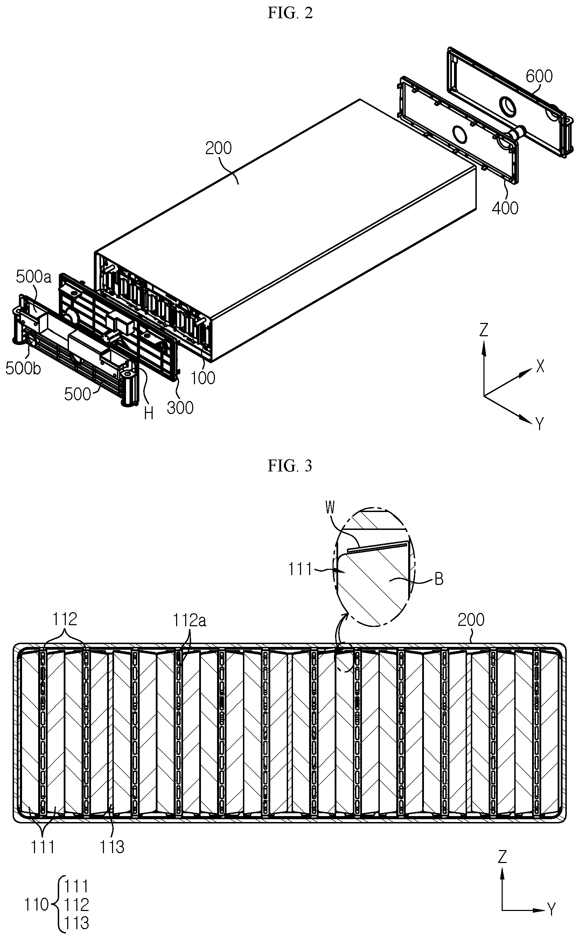

Referring to FIGS. 2 to 6, the sub module 100 includes a cell stack assembly 110. The sub module 100 may further include a front bus bar frame assembly 120A and a rear bus bar frame assembly 120B in addition to the cell stack assembly 110.

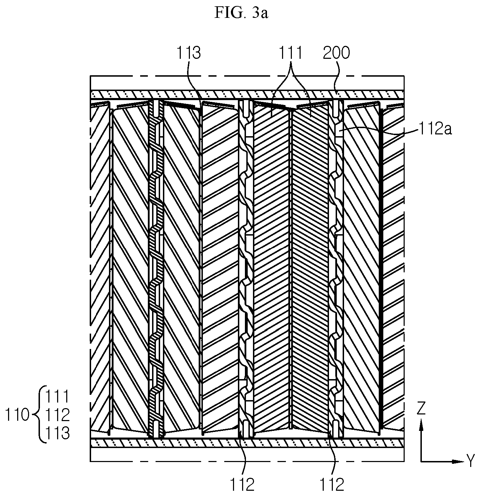

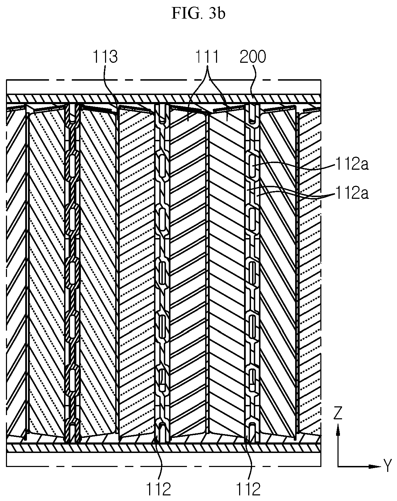

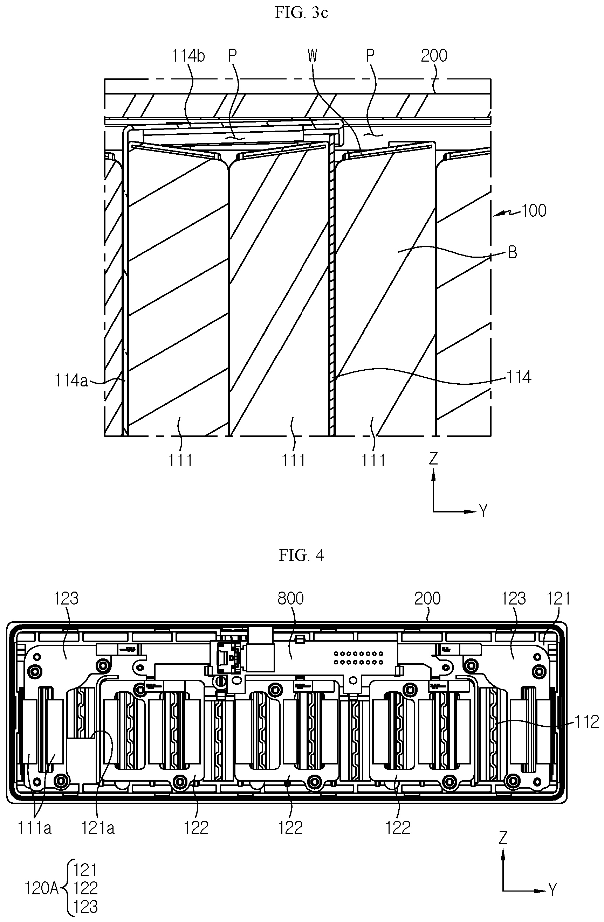

Referring to FIGS. 3 to 3b, the cell stack assembly 110 may include a plurality of battery cells 111, and at least one flow path spacer 112 interposed between adjacent battery cells 111. In addition, the stack assembly 110 may further include at least one buffer pad 113 interposed between the adjacent battery cells 111. The battery cell 111, the flow path spacer 112 and the buffer pad 113 are stacked in a vertical standing form on the ground (a side parallel to the X-Y plane) to form a single cell stack assembly 110.

As the battery cell 111, a pouch-type battery cell having a pair of electrode leads 111a drawn out in opposite directions along the longitudinal direction (parallel to the X-axis) of the battery cell 111 may be used.

Referring to FIGS. 3 to 3b and FIGS. 5 and 6 together, the flow path spacer 112 is interposed between adjacent battery cells 111. The flow path spacer 112 includes a cooling liquid flow path 112a so that the insulating cooling liquid introduced into the battery module may flow along the longitudinal direction (parallel to the X-axis) of the battery module. The cooling liquid flow path 112a may be provided in plurality. The cooling liquid flow path 112a extends along the longitudinal direction (parallel to the X-axis) of the flow path spacer 112.

The flow path spacer 112 may be interposed between adjacent battery cells 111, respectively. In this case, since one side and the other side of each of the battery cells 111 can be cooled by the flow path spacer 112, there is an advantage in that the cooling effect is maximized and the flow of the insulating cooling liquid introduced into the battery module becomes smoother.

Meanwhile, unlike this, the number of the flow path spacers 112 may be applied only by approximately 1/2 of the number of battery cells 111. Specifically, the plurality of flow path spacers 112 may be arranged such that a pair of battery cells 111 are positioned between a pair of adjacent flow path spacers 112. In this case, only one of both sides of all the battery cells 111 is in contact with the flow path spacer 112. When the plurality of flow path spacers 112 are arranged in this way, both the improvement of the cooling efficiency of the battery cells 111 and the improvement of the energy density may be realized.

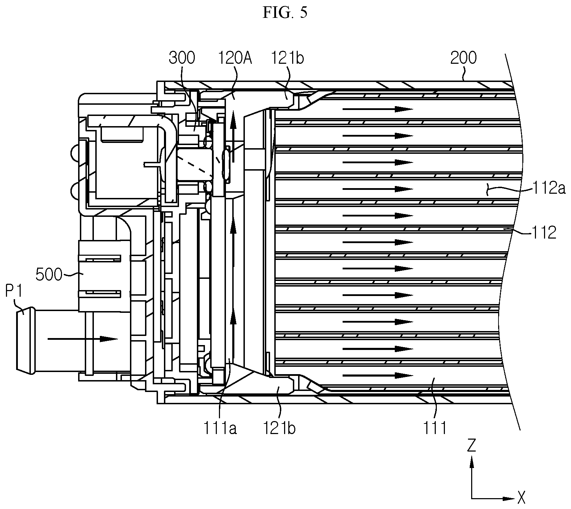

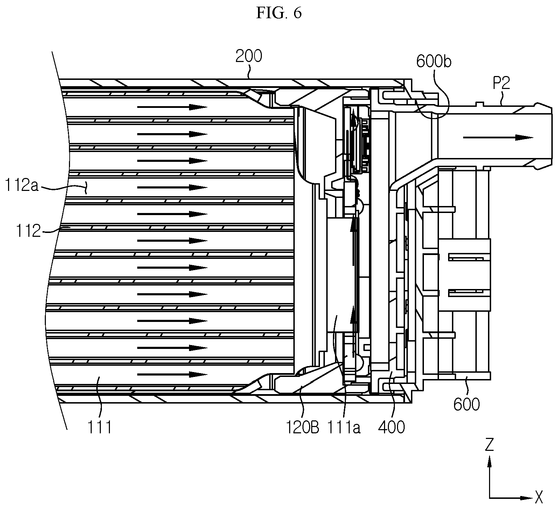

Referring to FIG. 3 together with FIGS. 5 and 6, the cooling liquid flow path 112a has a hole shape perforated along the longitudinal direction (parallel to the X-axis) of the flow path spacer 112. In this case, the insulating cooling liquid flowing inside the flow path spacer 112 does not directly contact the body of the battery cell 111, but indirectly contacts the body of the battery cell 111 through the flow path spacer 112. The cooling liquid flow path 112a may be provided in plurality. In this case, the cooling liquid flow paths 112a may be formed to be spaced apart from each other along the height direction (parallel to the Z-axis) of the flow path spacer 112.

Referring to FIG. 3a together with FIGS. 5 and 6, the flow path spacer 112 may have a shape that alternately contacts a first battery cell located at one side of the flow path spacer 112 and a second battery cell located at the other side of the flow path spacer along the height direction (a direction parallel to the Z-axis) of the flow path spacer 112. In this case, the cooling liquid flow path 112a includes a first cooling liquid flow path formed between the flow path spacer 112 and the first battery cell and a second cooling liquid flow path formed between the flow path spacer 112 and the second battery cell. The first cooling liquid flow path and the second cooling liquid flow path are alternately formed along the height direction (parallel to the Z-axis) of the flow path spacer 112.

According to the structure of the flow path spacer 112 shown in FIG. 3a as described above, the insulating cooling liquid flowing through the first cooling liquid flow path directly contacts the first battery cell to perform cooling. The insulating cooling liquid flowing through the second cooling liquid flow path directly contacts the second battery cell to perform cooling. When cooling is performed through direct contact between the insulating cooling liquid and the battery cell 111 as above, cooling efficiency may be improved. In addition, when the first cooling liquid flow path for supplying the insulating cooling liquid to the first battery cell and the second cooling liquid flow path for supplying the insulating cooling liquid to the second battery cell have a separated structure from each other as shown in FIG. 3a, insulating cooling liquid may flow more smoothly, and cooling efficiency may be maximized.

Next, a structure of a flow path spacer having a shape different from that of the flow path spacer of FIG. 3 and the flow path spacer of FIG. 3a described above will be described with reference to FIG. 3b together with FIGS. 5 and 6.

The flow path spacer 112 shown in FIG. 3b includes a first portion disposed to be spaced apart from the first battery cell located at one side of the flow path spacer 112 and the second battery cell located at the other side of the flow path spacer 112, and a second portion in contact with both of the pair of battery cells.

In this case, the cooling liquid flow path 112a includes a first cooling liquid flow path formed between the first portion and the first battery cell and between the second portion and the second battery cell, respectively, and a second cooling liquid flow path surrounded by the second portion. The insulating cooling liquid flowing through the first cooling liquid flow path performs cooling through direct contact, and the insulating cooling liquid flowing through the second cooling liquid flow path performs cooling through indirect contact. In addition, the first cooling liquid flow path and the second cooling liquid flow path are alternately formed along the height direction (parallel to the Z-axis) of the flow path spacer.

On the other hand, in the present disclosure, the insulating cooling liquid used for cooling should not cause a problem even when it comes into direct contact with electrically conductive parts. As the insulating liquid, it is preferable to use a cooling liquid with improved insulation in consideration of this. As the insulating cooling liquid, for example, insulating oil may be used.

The buffer pad 113 may be interposed between adjacent battery cells 111 to absorb volume expansion due to swelling of the battery cells 111.

Next, a cell stack assembly 110 of a different form from that shown in FIGS. 3 to 3b will be described with reference to FIG. 3c. Referring to FIG. 3c, the cell stack assembly 110 includes a cooling fin 114 instead of the flow path spacer 120 illustrated in FIGS. 3 to 3b. Specifically, the cell stack assembly 110 includes a plurality of battery cells 111 and a plurality of cooling fins 114 interposed between the adjacent battery cells 111. The cell stack assembly 110 may further include at least one buffer pad (not shown) interposed between the adjacent battery cells 111. The battery cells 111, the cooling fins 114, and the buffer pad are stacked in a vertical standing form on the ground (parallel to the X-Y plane) to form one cell stack assembly 110.

The cooling fin 114 includes a body contact portion 114a interposed between the battery cells 111 adjacent to each other and a wing cover portion 114b bent at any one of the top and bottom of the body contact portion 114a to cover the cell wing portion W of the battery cell 111.

The body contact portion 114a is interposed between the cell body portions B of the pair of adjacent battery cells 111 and is in contact with the cell body portions B of the battery cells 111. The body contact portion 114a rapidly conducts heat generated from the cell body portion B of the battery cell 111 in the width direction of the cooling fin 114, that is, in the height direction (parallel to the Z-axis) of the battery module to move toward the wing cover portion 114b. As such, the heat conducted toward the wing cover portion 114b is transferred along the longitudinal direction (parallel to the X-axis) of the battery module by the insulating cooling liquid flowing through the cooling liquid flow path P formed between the cell wing portion W of the battery cell 111 and the wing cover portion 114b and/or between the wing cover portion 114b and the inner surface of the module housing 200, and is discharged to the outside of the battery module.

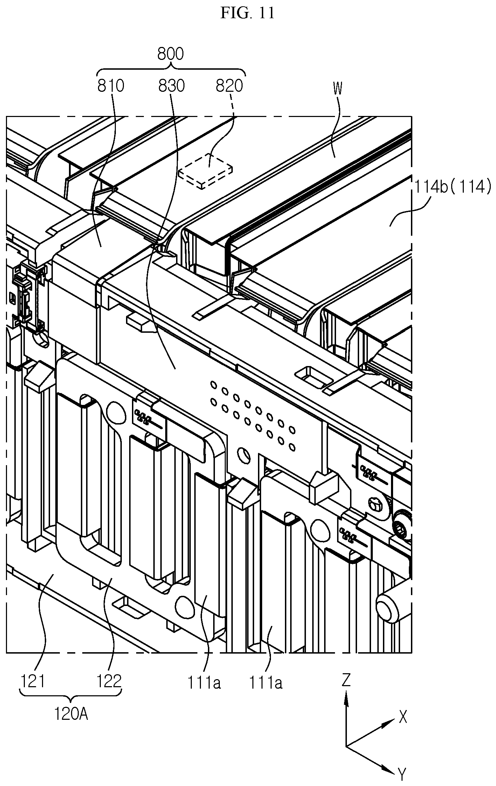

In addition to forming the cooling liquid flow path P as described above, the wing cover portion 114b may also perform the function of absorbing the impact when external impact is applied so that the cell stack assembly 110 moves in the vertical direction (parallel to the Z-axis) within the module housing 200. This impact absorption function of the wing cover portion 114b may help prevent damage to the sensing line 810 and the temperature sensor 820 interposed between the cell wing portion W and the cell body portion B (see FIG. 11). The sensing assembly 800 including the sensing line 810 and the temperature sensor 820 will be described later in detail.

Referring to FIGS. 3 to 6, the front bus bar frame assembly 120A and the rear bus bar frame assembly 120B are coupled to one side and the other side in the longitudinal direction (parallel to the X axis) of the cell stack assembly 110, respectively, so that a plurality of battery cells 111 are electrically connected. The front bus bar frame assembly 120A has substantially the same structure except that the inner terminal 123 is provided and the rear bus bar frame assembly 120B is not provided with the inner terminal 123. Accordingly, a detailed description of the specific structure of the rear bus bar frame assembly 120B will be omitted, and a detailed description of the specific structure of the front bus bar frame assembly 120A will be intensively described.

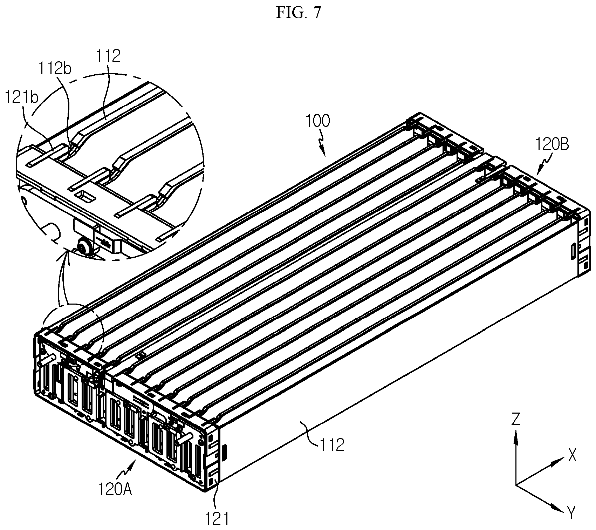

Referring to FIGS. 3 to 3b and FIGS. 4 to 7, the front bus bar frame assembly 120A includes a bus bar frame 121 and a plurality of bus bars 122. In addition, the front bus bar frame assembly 120A may further include a pair of inner terminals 123. The bus bar frame 121 covers one side of the cell stack assembly 110 in the longitudinal direction (parallel to the X-axis).

The bus bar frame 121 has a plurality of cooling liquid holes 121a. The cooling liquid hole 121a functions as a passage so that the insulating cooling liquid introduced into the module housing 200 through the inlet P1 provided in the front sealing plate 300 may flow toward the cell stack assembly 110 through the bus bar frame 121.

In consideration of this function, the cooling liquid hole 121a may be formed at a position corresponding to the flow path spacer 112 provided in the cell stack assembly 110. In addition, the cooling liquid hole 121a may have a size corresponding to that of the flow path spacer 112.

The cooling liquid introduced toward the cell stack assembly 110 through the cooling liquid hole 121a formed in the front bus bar frame assembly 120A is flowed toward the rear bus bar frame assembly 120B through the cooling liquid flow path 112a formed by the flow path spacer 112 along the arrow (see FIGS. 5 and 6). The insulating cooling liquid that has moved to the rear bus bar frame 120B flows toward the rear sealing plate 400 through the cooling liquid hole 121a formed in the rear bus bar frame 120B, and is emitted out of the battery module through the outlet P2 provided in the rear sealing plate 400. In this process, the insulating cooling liquid comes into direct contact with the electrode lead 111a of the battery cell 111, the bus bar 122 and the inner terminal 123 to effectively cool the inside of the battery module. In addition, the insulating cooling liquid comes into direct or indirect contact with the cell body portion B of the battery cell 111 to effectively cool the battery cell 111.

The bus bar 122 is fixed on the bus bar frame 121 and is coupled to the electrode lead 111a drawn out through a lead slit formed in the bus bar frame 121 to electrically connect the plurality of battery cells 111. The bus bar 122 may include a cooling liquid hole formed at a position corresponding to the flow path spacer 112 so that the insulating cooling liquid may pass through, similarly to the bus bar frame 121.

Meanwhile , when the cell stack assembly 110 of the present disclosure has the form shown in FIG. 3c unlike the form shown in FIGS. 3 to 3b, the cooling liquid hole 121a may be formed at a position corresponding to the cooling liquid flow path P formed between the cell wing portion W of the battery cell 111 and the wing cover portion 114b and/or between the wing cover portion 114b and the inner surface of the module housing 200.

In this case, the cooling liquid introduced into the cell stack assembly 110 through the cooling liquid hole 121a formed in the front bus bar frame assembly 120A moves toward the rear bus bar frame 120B through the cooling liquid flow path P formed between the cell wing portion W of the battery cell 111 and the wing cover portion 114b and/or between the wing cover portion 114b and the inner surface of the module housing 200.

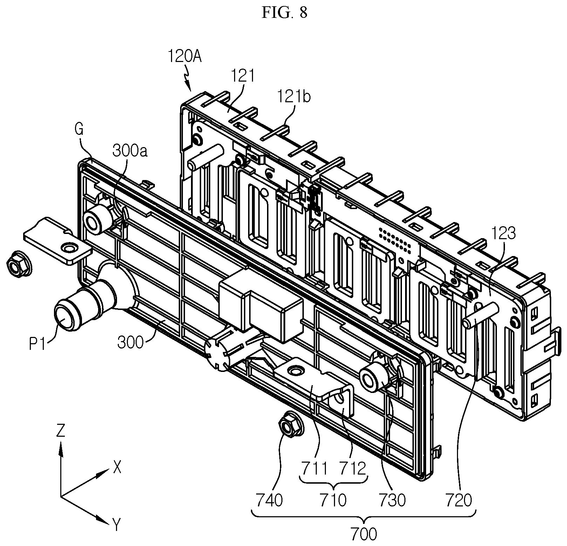

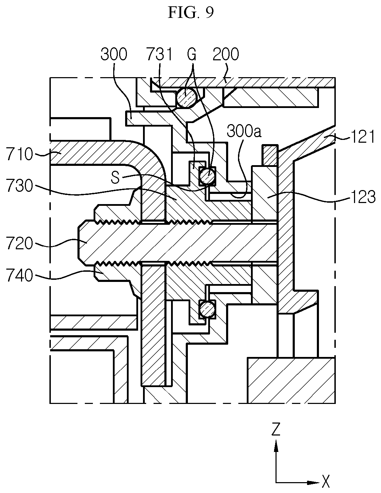

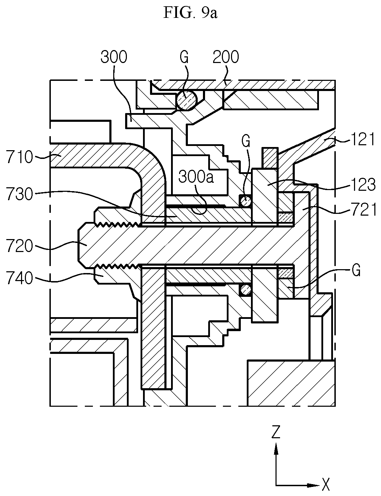

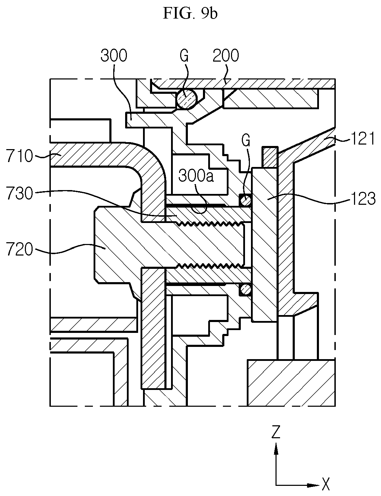

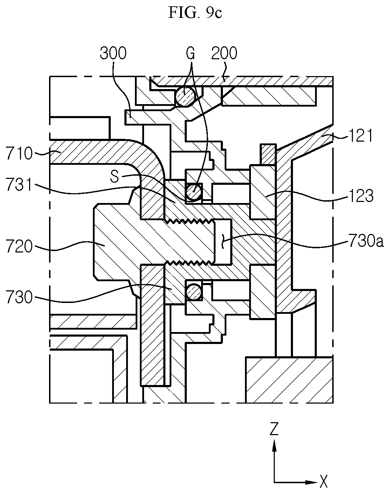

The inner terminal 123 is fixed on the bus bar frame 121 and is coupled to the electrode lead 111a of the battery cell 111 located at the outermost battery cell 111 among the battery cells 111 provided in the cell stack assembly 110. The inner terminal 123 functions as a high potential terminal. The inner terminal 123 located at one side of the longitudinal direction (parallel to the Y-axis) of the bus bar frame 121 functions as a positive electrode high potential terminal, and the inner terminal 123 located at the other longitudinal side of the bus bar frame 121 functions as a negative electrode high potential terminal. The inner terminal 123 is electrically connected to an outer terminal 710 (see FIGS. 8 and 9) to be described later.

The insulating cooling liquid flowing into the battery module may fill the space between the front sealing plate 300 and the front bus bar frame assembly 120A and may also fill the space between the rear sealing plate 400 and the rear bus bar frame assembly 120B. Accordingly, the insulating cooling liquid comes into contact with the electrode lead 111a, the bus bar 122, and the inner terminal 123, which are components that can generate heat intensively, thereby efficiently cooling the battery module.

Meanwhile, referring to FIGS. 5 to 7 together with FIGS. 3 to 3b, the bus bar frame 121 of the front bus bar frame assembly 120A and the bus bar frame 121 of the rear bus bar frame assembly 120B may include a plurality of guide ribs 121b formed on the top and bottom along the longitudinal direction (parallel to the Y-axis). The guide rib 121b has a shape extending in the direction toward the cell stack assembly 110. The guide rib 121b is formed at a position corresponding to the flow path spacer 112.

When the bus bar frame 121 includes the guide rib 121b, the fixing portion 112b having a shape corresponding to the guide rib 121b may be formed at both ends of the flow path spacer 112 in the longitudinal direction (parallel to the X-axis). By the guide rib 121b and the fixing portion 112b, the movement of the flow path spacer 112 in the height direction (parallel to the Z-axis) and longitudinal direction (parallel to the X-axis) is restricted. Accordingly, when the front bus bar frame assembly 120A and the rear bus bar frame assembly 120B are coupled to the cell stack assembly 110, the coupling position may be guided, thereby increasing the convenience of assembly.

Meanwhile, when the cell stack assembly 110 has the form shown in FIG. 3c, the cooling fin 114 may further include a pair of fixing portions (not shown) formed at both ends in the longitudinal direction (parallel to the X-axis) of the wing cover portion 114b. When the cooling fin 114 has a fixing portion as above, the fixing portion has a shape corresponding to the guide rib 121b provided on the bus bar frame 121. The fixing portion provided in the cooling fin 114 guides the coupling position when coupling the front bus bar frame assembly 120A and the rear bus bar frame assembly 120B to the cell stack assembly 110, thereby increasing the convenience of assembly.

Referring to FIGS. 1 to 6, the module housing 200 accommodates a sub module 100 including the cell stack assembly 110, the front bus bar frame assembly 120A, and the rear bus bar frame assembly 120B. The module housing 200 has one side and the other side open in the longitudinal direction (parallel to the X-axis).

Referring to FIGS. 5, 6 and 8, the front sealing plate 300 covers the opening formed at one side of the module housing 200 in the longitudinal direction (parallel to the X-axis). The front sealing plate 300 has an inlet P1 for inflow of the insulating cooling liquid. To prevent the insulating cooling liquid from leaking, a sealing member G may be interposed between the edge surface of the front sealing plate 300 and the inner surface of the module housing 200 (see FIG. 9). The sealing member G may be, for example, a gasket.

The front sealing plate 300 is provided with a pair of terminal holes 300a through which components for electrical connection between the inner terminal 123 provided in the front bus bar frame assembly 120A and the outer terminal 710 to be described later may pass. The terminal hole 300a is formed at a position corresponding to the inner terminal 123.

The rear sealing plate 400 covers the opening at the other side in the longitudinal direction (parallel to the X-axis) of the module housing 200, and has an outlet P2 for discharging the insulating cooling liquid. As in the case of the front sealing plate 300, a sealing member G may be interposed between the edge surface of the rear sealing plate 400 and the inner surface of the module housing 200 to prevent the insulating cooling liquid from leaking. The sealing member G may be, for example, a gasket.

The front sealing plate 300 and rear sealing plate 400 may be made of an insulating resin for electrical insulation.

Referring to FIGS. 8 to 9c, the terminal assembly 700 includes an outer terminal 710 located on the outer side of the front sealing plate 300, a stud 720 inserted into the terminal hole 300a formed in the front sealing plate 300, and a terminal spacer 730 interposed between the inner surface of the terminal hole 300a and the stud 720. The terminal assembly 700 has a leakage prevention structure that prevents the insulating cooling liquid introduced into the battery module from leaking through the gap formed between the stud 720 and the terminal spacer 730 and the gap between the inner surface of terminal hole 300a and terminal spacer 730.

Referring to FIGS. 8, 9 and 9a, the terminal assembly 700 may further include a fastening nut 740 bolted to the stud 720.

Referring to FIG. 9, the stud 720 is coupled to the inner terminal 123. The stud 720 may be press-fitted into the inner terminal 123, for example. The terminal spacer 730 may be coupled to the stud 720 by bolting. The terminal spacer 730 is closely attached to the inner terminal 123.

The front sealing plate 300 has a stepped portion S formed on the inner surface of the terminal hole 300a. The terminal spacer 730 includes a spacer flange portion 731 formed at a position corresponding to the stepped portion S. A sealing member G may be interposed between the stepped portion S and the spacer flange portion 731. The sealing member G may be, for example, an O-ring.

The fastening nut 740 passes through the fastening portion 712 of the outer terminal 710 and is bolted to the stud 720 exposed to the outside of the front sealing plate 300 so that the fastening portion 712 of the outer terminal 710 is in close contact with the terminal spacer 730. Accordingly, one side and the other side of the terminal spacer 730 in the longitudinal direction (parallel to the X-axis) are in close contact with the inner terminal 123 and the outer terminal 710, respectively, so that the inner terminal 123 and the outer terminal 710 are electrically connected.

Since the terminal assembly 700 of the present disclosure has the structure as described above, it is possible to effectively prevent the insulating cooling liquid introduced into the battery module from leaking through the gap formed between the inner surface of the terminal hole 300a formed in the front sealing plate 300 and the terminal spacer 730.

Referring to FIG. 9a, the stud 720 passes through the inner terminal 123 and includes a stud flange portion 721 formed at one end in the longitudinal direction (parallel to the X-axis). The inner terminal 123 is interposed between the stud flange portion 721 and the terminal spacer 730. As the fastening nut 740 is fastened, one side and the other side of the terminal spacer 730 in the longitudinal direction (parallel to the X-axis) are closely attached to the inner terminal 123 and the outer terminal 710, respectively. Accordingly, the inner terminal 123 and the outer terminal 710 are electrically connected.

Meanwhile, a sealing member G may be interposed in at least one place between the stud flange portion 721 and the inner terminal 123 and between the inner surface of the terminal hole 300a and the terminal spacer 730. As the sealing member G interposed between the stud flange portion 721 and the inner terminal 123, for example, a sealing washer may be applied. The sealing washer may include a metal washer. The sealing washer may further include an O-ring provided on the inner surface of the washer made of metal to improve airtightness. As the sealing member G applied between the inner surface of the terminal hole 300a and the terminal spacer 730, for example, an O-ring may be applied. The sealing member G applied between the inner surface of the terminal hole 300a and the terminal spacer 730 may be disposed in a space surrounded by the front sealing plate 300, the inner terminal 123 and the terminal spacer 730, more specifically.

Since the terminal assembly 700 of the present disclosure has the structure as described above, it is possible to effectively prevent the insulating cooling liquid introduced into the battery module from leaking through the gap formed between the inner surface of the terminal hole 300a of the front sealing plate 300 and the terminal spacer 730 and/or the gap formed between the stud 720 and the terminal spacer 730.

Next, with reference to FIGS. 9b and 9c, a terminal assembly having a shape different from the terminal assembly shown in FIGS. 9 and 9a described above will be described.

Referring to FIGS. 9b and 9c, the terminal assembly 700 of the present disclosure includes an outer terminal 710 located on the outer side of the front sealing plate 300, a stud 720 inserted into the terminal hole 300a formed in the front sealing plate 300, and a terminal spacer 730 interposed between the inner surface of the terminal hole 300a and the stud 720.

Referring to FIG. 9b, the terminal spacer 730 is coupled to the inner terminal 123. The terminal spacer 730 may, for example, be coupled to the inner terminal 123 by welding. When the terminal spacer 730 and the inner terminal 123 are firmly connected by welding, it is possible to prevent the insulating cooling liquid from entering through the coupling portion between the inner terminal 123 and the terminal spacer 730, and accordingly it is possible to prevent the insulating cooling liquid from leaking to the outside through the gap between the terminal spacer 730 and the stud 720.

The stud 720 may have a form having a bolt head. That is, the stud 720 shown in FIG. 9b may have substantially the same shape as the combination of the stud 720 and the fastening nut 740 shown in FIGS. 9 and 9a described above. The stud 720 is bolted to the terminal spacer 730 so that the outer terminal 710 is in close contact with the terminal spacer 730. By fastening the stud 720, the bolt head of stud 720 presses the outer terminal 710, and thus the outer terminal 710 is closely attached to the terminal spacer 730. As a result, one side and the other side of the terminal spacer 730 the longitudinal direction (parallel to the X-axis) are in close contact with the inner terminal 123 and the outer terminal 710, respectively, so that the inner terminal 123 and the outer terminal 710 are electrically connected.

Meanwhile, a sealing member G may be interposed between the inner surface of the terminal hole 300a and the terminal spacer 730. As the sealing member G applied between the inner surface of the terminal hole 300a and the terminal spacer 730, for example, an O-ring may be applied. The sealing member G applied between the inner surface of the terminal hole 300a and the terminal spacer 730 may be disposed in a space surrounded by the front sealing plate 300, the inner terminal 123 and the terminal spacer 730, more specifically.

Since the terminal assembly 700 of the present disclosure has the structure as described above, it is possible to effectively prevent the insulating cooling liquid introduced into the battery module from leaking through the gap formed between the inner surface of the terminal hole 300a of the front sealing plate 300 and the terminal spacer 730 and/or the gap formed between the stud 720 and the terminal spacer 730.

Referring to FIG. 9c, the terminal spacer 730 is coupled to the inner terminal 123. The terminal spacer 730 may be coupled to the inner terminal 123 by press-fitting, for example. The stud 720 may have a form having a bolt head. That is, the stud 720 shown in FIG. 9c may have substantially the same shape as the combination of the stud 720 and the fastening nut 740 shown in FIGS. 9 and 9a described above.

The stud 720 is inserted into the stud groove 730a formed to a predetermined depth in the center portion of the terminal spacer 730. The stud 720 is bolted to the terminal spacer 730 so that the outer terminal 710 is in close contact with the terminal spacer 730. By fastening the stud 720, the bolt head of the stud 720 presses the outer terminal 710, and thus the outer terminal 710 is closely attached to the terminal spacer 730. Accordingly, one side and the other side of the terminal spacer 730 in the longitudinal direction (parallel to the X-axis) are in close contact with the inner terminal 123 and the outer terminal 710, respectively, so that the inner terminal 123 and the outer terminal 710 are electrically connected.

The front sealing plate 300 has a stepped portion S formed on the inner surface of the terminal hole 300a. The terminal spacer 730 includes a spacer flange portion 731 formed at a position corresponding to the stepped portion S. A sealing member G may be interposed between the stepped portion S and the spacer flange portion 731. The sealing member G may be, for example, an O-ring.

Since the terminal assembly 700 of the present disclosure has the structure as described above, it is possible to effectively prevent the insulating cooling liquid introduced into the battery module from leaking through the gap formed between the inner surface of the terminal hole 300a of the front sealing plate 300 and the terminal spacer 730 and/or the gap formed between the stud 720 and the terminal spacer 730.

Referring to FIGS. 1 and 2 and FIGS. 5 and 6, the front end plate 500 covers the front sealing plate 300 and is fixed to the module housing 200. The rear end plate 600 covers the rear sealing plate 400 and is fixed to the module housing 200.

The front end plate 500 includes a terminal exposing portion 500a for exposing the connection portion 711 of the outer terminal 710 to the outside of the front end plate 500, and an inlet exposing portion 500b for exposing the inlet P1 to the outside of the front end plate 500. The rear end plate 600 includes an outlet exposing portion 600b for exposing the outlet P2 to the outside of the rear end plate 600.

When the front end plate 500 and the rear end plate 600 are applied, a sealing member G for preventing the insulating cooling liquid from leaking may be interposed in the coupling area between the front end plate 500 and the module housing 200 and the coupling area between the rear end plate 600 and the module housing 200. The sealing member G may be, for example, a gasket.

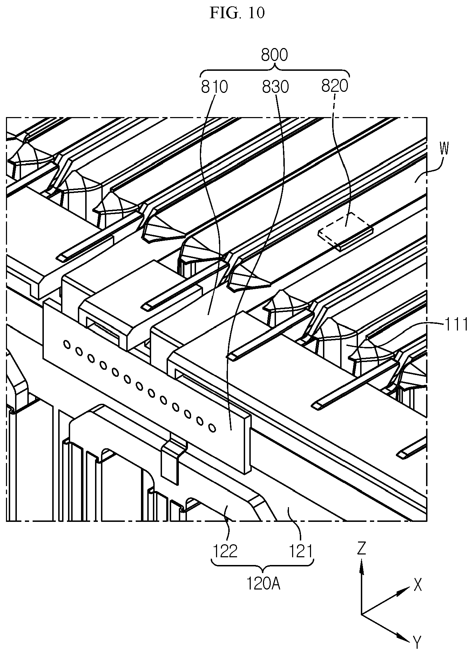

Referring to FIGS. 3 to 3b, 4 and 10, the sensing assembly 800 is disposed on the top of the sub module 100 and senses the voltage of the battery cell 111. The sensing assembly 800 includes a sensing line 810 electrically connected to the plurality of battery cells 111 and extending from one end of the battery cell 111 in the longitudinal direction (parallel to the X-axis) to the other longitudinal end. The sensing line 810 is electrically connected to the battery cells 111 at one side and the other side of the cell stack assembly 110 in the longitudinal direction (parallel to the X-axis). The electrical connection between the sensing line 810 and the battery cell 111 may be realized by coupling the sensing line 810 to the bus bar 122. It is also possible that the sensing line 810 is directly coupled to the electrode lead 111a of the battery cell 111.

The sensing line 810 may be interposed between the cell body portion B of the pouch-type battery cell 111 and the cell wing portion W folded toward the cell body portion B. This is to prevent the sensing line 810 from being damaged by the insulating cooling liquid flowing inside the battery module. When the battery cell 111 is a pouch type, an area in which an electrode assembly (not shown) is accommodated may be defined as the cell body portion B, and a region elongated along the longitudinal direction (parallel to the X-axis) of the battery module in the sealing area formed around the cell body portion B may be defined as the cell wing portion W.

The sensing assembly 800 may additionally perform the function of sensing the temperature of the battery cell 111 in addition to sensing the voltage. To this end, the sensing assembly 800 may further include at least one temperature sensor 820 mounted on the sensing line 810. The temperature sensor 820 may be disposed adjacent to the electrode lead 111a having a relatively larger heat generation compared to other regions for the purpose of effective temperature sensing. Like the sensing line 810, the temperature sensor 820 may be interposed between the cell body portion B of the battery cell 111 and the cell wing portion W folded toward the cell body portion B. This is to prevent the temperature sensor 820 from being damaged by the insulating cooling liquid flowing inside the battery module. In addition, this is to prevent or minimize the contact between the temperature sensor 820 and the insulating cooling liquid so that the temperature of the battery cell 111 can be accurately sensed.

The sensing assembly 800 may further include a printed circuit board (PCB) 830 electrically connected to the sensing line 810. The PCB 830 may be fixed on the bus bar frame 121. A connector assembly (not shown) may be mounted on the PCB 830, and a control device such as a battery management system (BMS) (not shown) may be connected through this connector assembly. In this case, the BMS may measure and/or receive information about the voltage, temperature, etc. of the battery cell 111 and control charging/discharging of the battery module with reference to this.

On the other hand, referring to FIGS. 3c and 11, when the cell stack assembly 110 of the present disclosure includes a cooling fin 114 instead of the flow path spacer 112, the cell wing portion W covering the sensing line 810 and the temperature sensor 820 may be covered by the wing cover portion 114b of the cooling fin 114.

A battery pack according to an embodiment of the present disclosure may include at least one battery module according to an embodiment of the present disclosure as described above. The battery pack may include additional components such as a pack housing and/or a battery management system (BMS) together with at least one battery module. The battery module may be fastened to the pack housing through the fastening hole H formed in the front end plate 500 and/or the rear end plate 600. That is, the fastening hole H may provide a space into which a fastening means such as a bolt for fastening the pack housing and the battery module is inserted. On the other hand, when the battery pack includes a plurality of battery modules, it is also possible that the plurality of battery modules are fastened to each other through the fastening hole H formed in the front end plate 500 and/or the rear end plate 600.

The vehicle according to an embodiment of the present disclosure may include at least one battery module and/or the battery pack as described above. The vehicle according to an embodiment of the present disclosure may be, for example, a hybrid vehicle or an electric vehicle that operates by being powered by the battery module and/or the battery pack of the present disclosure.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

### [Explanation of reference signs]

100: sub module
110: cell stack assembly
111: battery cell
111a: electrode lead
B: cell body portion
W: cell wing portion
112: flow path spacer
112a: cooling liquid flow path
112b: fixing portion
113: buffer pad
114: cooling fin
114a: body contact portion
114b: wing cover portion
120A: front bus bar frame assembly
120B: rear bus bar frame assembly
121: bus bar frame
121a: cooling liquid hole
121b: guide rib
122: bus bar
123: inner terminal
200: module housing
300: front sealing plate
300a: terminal hole
P1: inlet
S: stepped portion
400: rear sealing plate
P2: outlet
500: front end plate
500a: terminal exposing portion
500b: inlet exposing portion
600: rear end plate
600b: outlet exposing portion
700: terminal assembly
710: outer terminal
711: connection portion
712: fastening portion
720: stud
721: stud flange portion
730: terminal spacer
730a: stud groove
731: spacer flange portion
740: fastening nut
G: sealing member
800: sensing assembly
810: sensing line
820: temperature sensor
830: PCB (Printed Circuit Board)
in the art from this detailed description.

### [Explanation of reference signs]

100: sub module
110: cell stack assembly
111: battery cell
111a: electrode lead
B: cell body portion
W: cell wing portion
112: flow path spacer
112a: cooling liquid flow path
112b: fixing portion
113: buffer pad
114: cooling fin
114a: body contact portion
114b: wing cover portion
120A: front bus bar frame assembly
120B: rear bus bar frame assembly
121: bus bar frame
121a: cooling liquid hole
121b: guide rib
122: bus bar
123: inner terminal
200: module housing
300: front sealing plate
300a: terminal hole
P1: inlet
S: stepped portion
400: rear sealing plate
P2: outlet
500: front end plate
500a: terminal exposing portion
500b: inlet exposing portion
600: rear end plate
600b: outlet exposing portion
700: terminal assembly
710: outer terminal
711: connection portion
712: fastening portion
720: stud
721: stud flange portion
730: terminal spacer
730a: stud groove
731: spacer flange portion
740: fastening nut
G: sealing member
800: sensing assembly
810: sensing line
820: temperature sensor
830: PCB (Printed Circuit Board)

## Claims

1. A battery module, comprising:
a sub module (100) including a cell stack assembly (110) having a plurality of battery cells (111);
a module housing (200) configured to accommodate the sub module (100);
a front sealing plate (300) configured to cover an opening at one longitudinal side of the module housing (200) and having an inlet (P1) through which a cooling liquid is introduced;
a rear sealing plate (400) configured to cover an opening at the other longitudinal side of the module housing (200) and having an outlet (P2) through which the cooling liquid is discharged; and
a pair of terminal assemblies (700) including an outer terminal (710) located at an outer side of the front sealing plate (300), a stud (720) inserted into a terminal hole (300a) formed in the front sealing plate (300), and a terminal spacer (730) interposed between an inner surface of the terminal hole (300a) and the stud (720),
wherein the stud (720) is bolted to the terminal spacer (730), such that the outer terminal (710) comes into close contact with the terminal spacer (730).

2. The battery module according to claim 1, wherein the sub module (100) includes:
a front bus bar frame assembly (120A) coupled to one longitudinal side of the cell stack assembly (110); and
a rear bus bar frame assembly (120B) coupled to the other longitudinal side of the cell stack assembly (110).

3. The battery module according to claim 2, wherein the front bus bar frame assembly (120A) includes:
a bus bar frame (121);
a plurality of bus bars (122) fixed on the bus bar frame (121) and connected to an electrode lead (111a) of the battery cell (111); and
a pair of inner terminals (123) fixed on the bus bar frame (121) and connected to an electrode lead (111a) of a battery cell (111) located at an outermost side among the battery cells (111) included in the cell stack assembly (110).

4. The battery module according to claim 3, wherein the terminal assembly (700) further includes a fastening nut (740) bolted to the stud (720) so that the outer terminal (710) comes into close contact with the terminal spacer (730).

5. The battery module according to claim 4,
wherein the stud (720) is coupled to the inner terminal (710), and
wherein the terminal spacer (730) is bolted to the stud (720).

6. The battery module according to claim 4,
wherein the front sealing plate (300) includes a stepped portion (S) formed on the inner surface of the terminal hole (300a), and
wherein the terminal spacer (730) includes a spacer flange portion (731) formed at a position corresponding to the stepped portion (S).

7. The battery module according to claim 6, wherein a sealing member (G) is interposed between the stepped portion (S) and the spacer flange portion (731).

8. A battery module, comprising:
a sub module (100) including a cell stack assembly (110) having a plurality of battery cells (111);
a module housing (200) configured to accommodate the sub module (100);
a front sealing plate (300) configured to cover an opening at one longitudinal side of the module housing (200) and having an inlet (P1) through which a cooling liquid is introduced;
a rear sealing plate (400) configured to cover an opening at the other longitudinal side of the module housing (200) and having an outlet (P2) through which the cooling liquid is discharged; and
wherein the sub module (100) includes:
a pair of terminal assemblies (700) including an outer terminal (710) located at an outer side of the front sealing plate (300), a stud (720) inserted into a terminal hole (300a) formed in the front sealing plate (300), and a terminal spacer (730) interposed between an inner surface of the terminal hole (300a) and the stud (720),
a front bus bar frame assembly (120A) coupled to one longitudinal side of the cell stack assembly (110); and
a rear bus bar frame assembly (120B) coupled to the other longitudinal side of the cell stack assembly (110);
wherein the front bus bar frame assembly (120A) includes:
a bus bar frame (121);
a plurality of bus bars (122) fixed on the bus bar frame (121) and connected to an electrode lead (111a) of the battery cell (111); and
a pair of inner terminals (123) fixed on the bus bar frame (121) and connected to an electrode lead (111a) of a battery cell (111) located at an outermost side among the battery cells (111) included in the cell stack assembly (110),
wherein the stud (720) passes through the inner terminal (123),
wherein the stud (720) includes a stud flange portion (721) formed at one end thereof, and
wherein the terminal assembly (700) further includes a fastening nut (740) bolted to the stud (720) so that the outer terminal (710) comes into close contact with the terminal spacer (730).

9. The battery module according to claim 8, wherein a sealing member (G) is interposed in at least one place between the stud flange portion (721) and the inner terminal (123) and between the inner surface of the terminal hole (300a) and the terminal spacer (730).

10. The battery module according to claim 3,
wherein the terminal spacer (730) is coupled to the inner terminal (123), and
wherein the stud (720) is bolted to the terminal spacer (730) so that the outer terminal (710) comes into close contact with the terminal spacer (730).

11. The battery module according to claim 10, wherein a sealing member (G) is interposed between the inner surface of the terminal hole (300a) and the terminal spacer (730).

12. The battery module according to claim 3,
wherein the terminal spacer (730) is coupled to the inner terminal (123), and
wherein the stud (720) is inserted into a stud groove (730a) formed in a center portion of the terminal spacer (730) and bolted to the terminal spacer (730) so that the outer terminal (710) comes into close contact with the terminal spacer (730).

13. The battery module according to claim 12,
wherein the front sealing plate (300) includes a stepped portion (S) formed on the inner surface of the terminal hole (300a), and
wherein the terminal spacer (730) includes a spacer flange portion (731) formed at a position corresponding to the stepped portion (S).

14. The battery module according to claim 13, wherein a sealing member (G) is interposed between the stepped portion (S) and the spacer flange portion (731).

15. The battery module according to claim 1, wherein the terminal assembly (700) has a leakage prevention structure so that the insulating cooling liquid introduced into the battery module does not leak through a gap formed between the stud (720) and the terminal spacer (730) and a gap formed between the inner surface of the terminal hole (300a) and the terminal spacer (730).

16. A battery pack comprising the battery module according to any one of claims 1 to 15.

17. A vehicle comprising the battery module according to any one of claims 1 to 15.

## Patentansprüche

1. Batteriemodul aufweisend:
ein Submodul (100) mit einer Zellenstapelanordnung (110) mit mehreren Batteriezellen (111);
ein Modulgehäuse (200), das eingerichtet ist, das Submodul (100) aufzunehmen;
eine vordere Dichtungsplatte (300), die eingerichtet ist, eine Öffnung an einer Längsseite des Modulgehäuses (200) abzudecken, und die einen Einlass (P1) aufweist, durch den eine Kühlflüssigkeit eingeleitet wird;
eine hintere Dichtungsplatte (400), die eingerichtet ist, eine Öffnung an der anderen Längsseite des Modulgehäuses (200) abzudecken, und die einen Auslass (P2) aufweist, durch den die Kühlflüssigkeit abgeführt wird; und
ein Paar von Anschlussanordnungen (700) mit einem äußeren Anschluss (710), der an einer Außenseite der vorderen Dichtungsplatte (300) angeordnet ist, einem Bolzen (720), der in ein Anschlussloch (300a) eingesetzt ist, das in der vorderen Dichtungsplatte (300) ausgebildet ist, und einem Anschlussabstandshalter (730), der zwischen einer Innenfläche des Anschlusslochs (300a) und dem Bolzen (720) angeordnet ist,
wobei der Bolzen (720) mit dem Anschlussabstandshalter (730) verschraubt ist, so dass der äußere Anschluss (710) in engen Kontakt mit dem Anschlussabstandshalter (730) kommt.

2. Batteriemodul nach Anspruch 1, wobei das Submodul (100) aufweist:
eine vordere Sammelschienenrahmenanordnung (120A), die mit einer Längsseite der Zellenstapelanordnung (110) gekoppelt ist; und
eine hintere Sammelschienenrahmenanordnung (120B), die mit der anderen Längsseite der Zellenstapelanordnung (110) gekoppelt ist.

3. Batteriemodul nach Anspruch 2, wobei die vordere Sammelschienenrahmenanordnung (120A) aufweist:
einen Sammelschienenrahmen (121);
mehrere Sammelschienen (122), die an dem Sammelschienenrahmen (121) befestigt und mit einer Elektrodenleitung (111a) der Batteriezelle (111) verbunden sind; und
ein Paar von inneren Anschlüssen (123), die an dem Sammelschienenrahmen (121) befestigt und mit einer Elektrodenleitung (111a) einer Batteriezelle (111) verbunden sind, die an einer äußersten Seite unter den Batteriezellen (111) angeordnet ist, die in der Zellenstapelanordnung (110) enthalten sind.

4. Batteriemodul nach Anspruch 3, wobei die Anschlussanordnung (700) ferner eine Befestigungsmutter (740) aufweist, die mit dem Bolzen (720) verschraubt ist, so dass der äußere Anschluss (710) in engen Kontakt mit dem Anschlussabstandshalter (730) kommt.

5. Batteriemodul nach Anspruch 4,
wobei der Bolzen (720) mit dem inneren Anschluss (710) gekoppelt ist, und
wobei der Anschlussabstandshalter (730) mit dem Bolzen (720) verschraubt ist.

6. Batteriemodul nach Anspruch 4,
wobei die vordere Dichtungsplatte (300) einen gestuften Abschnitt (S) aufweist, der an der Innenfläche des Anschlusslochs (300a) ausgebildet ist, und
wobei der Anschlussabstandshalter (730) einen Abstandshalterflanschabschnitt (731) aufweist, der an einer Position ausgebildet ist, die dem gestuften Abschnitt (S) entspricht.

7. Batteriemodul nach Anspruch 6, wobei ein Dichtungselement (G) zwischen dem gestuften Abschnitt (S) und dem Abstandshalterflanschabschnitt (731) angeordnet ist.

8. Batteriemodul aufweisend:
ein Submodul (100) mit einer Zellenstapelanordnung (110) mit mehreren Batteriezellen (111);
ein Modulgehäuse (200), das eingerichtet ist, das Submodul (100) aufzunehmen;
eine vordere Dichtungsplatte (300), die eingerichtet ist, eine Öffnung an einer Längsseite des Modulgehäuses (200) abzudecken, und die einen Einlass (P1) aufweist, durch den eine Kühlflüssigkeit eingeleitet wird;
eine hintere Dichtungsplatte (400), die eingerichtet ist, eine Öffnung an der anderen Längsseite des Modulgehäuses (200) abzudecken, und die einen Auslass (P2) aufweist, durch den die Kühlflüssigkeit abgeführt wird; und
wobei das Submodul (100) aufweist:
ein Paar von Anschlussanordnungen (700) mit einem äußeren Anschluss (710), der an einer Außenseite der vorderen Dichtungsplatte (300) angeordnet ist, einem Bolzen (720), der in ein Anschlussloch (300a) eingesetzt ist, das in der vorderen Dichtungsplatte (300) ausgebildet ist, und einem Anschlussabstandshalter (730), der zwischen einer Innenfläche des Anschlusslochs (300a) und dem Bolzen (720) angeordnet ist,
eine vordere Sammelschienenrahmenanordnung (120A), die mit einer Längsseite der Zellenstapelanordnung (110) gekoppelt ist; und
eine hintere Sammelschienenrahmenanordnung (120B), die mit der anderen Längsseite der Zellenstapelanordnung (110) gekoppelt ist;
wobei die vordere Sammelschienenrahmenanordnung (120A) aufweist:
einen Sammelschienenrahmen (121);
mehrere Sammelschienen (122), die an dem Sammelschienenrahmen (121) befestigt und mit einer Elektrodenleitung (111a) der Batteriezelle (111) verbunden sind; und
ein Paar von inneren Anschlüssen (123), die an dem Sammelschienenrahmen (121) befestigt und mit einer Elektrodenleitung (111a) einer Batteriezelle (111) verbunden sind, die an einer äußersten Seite unter den Batteriezellen (111) angeordnet ist, die in der Zellenstapelanordnung (110) enthalten sind,
wobei der Bolzen (720) durch den inneren Anschluss (123) verläuft,
wobei der Bolzen (720) einen Bolzenflanschabschnitt (721) aufweist, der an einem Ende davon ausgebildet ist, und
wobei die Anschlussanordnung (700) ferner eine Befestigungsmutter (740) aufweist, die mit dem Bolzen (720) verschraubt ist, so dass der äußere Anschluss (710) in engen Kontakt mit dem Anschlussabstandshalter (730) kommt.

9. Batteriemodul nach Anspruch 8, wobei ein Dichtungselement (G) an mindestens einer Stelle zwischen dem Bolzenflanschabschnitt (721) und dem inneren Anschluss (123) und zwischen der Innenfläche des Anschlusslochs (300a) und dem Anschlussabstandshalter (730) angeordnet ist.

10. Batteriemodul nach Anspruch 3,
wobei der Anschlussabstandshalter (730) mit dem inneren Anschluss (123) gekoppelt ist, und
wobei der Bolzen (720) mit dem Anschlussabstandshalter (730) verschraubt ist, so dass der äußere Anschluss (710) in engen Kontakt mit dem Anschlussabstandshalter (730) kommt.

11. Batteriemodul nach Anspruch 10, wobei ein Dichtungselement (G) zwischen der Innenfläche des Anschlusslochs (300a) und dem Anschlussabstandshalter (730) angeordnet ist.

12. Batteriemodul nach Anspruch 3,
wobei der Anschlussabstandshalter (730) mit dem inneren Anschluss (123) gekoppelt ist, und
wobei der Bolzen (720) in eine Bolzennut (730a) eingesetzt ist, die in einem Mittelabschnitt des Anschlussabstandshalters (730) ausgebildet ist, und mit dem Anschlussabstandshalter (730) verschraubt ist, so dass der äußere Anschluss (710) in engen Kontakt mit dem Anschlussabstandshalter (730) kommt.

13. Batteriemodul nach Anspruch 12,
wobei die vordere Dichtungsplatte (300) einen gestuften Abschnitt (S) aufweist, der an der Innenfläche des Anschlusslochs (300a) ausgebildet ist, und
wobei der Anschlussabstandshalter (730) einen Abstandshalterflanschabschnitt (731) aufweist, der an einer Position ausgebildet ist, die dem gestuften Abschnitt (S) entspricht.

14. Batteriemodul nach Anspruch 13, wobei ein Dichtungselement (G) zwischen dem gestuften Abschnitt (S) und dem Abstandshalterflanschabschnitt (731) angeordnet ist.

15. Batteriemodul nach Anspruch 1, wobei die Anschlussanordnung (700) eine Leckverhinderungsstruktur derart aufweist, dass die isolierende Kühlflüssigkeit, die in das Batteriemodul eingeleitet wird, nicht durch einen Spalt, der zwischen dem Bolzen (720) und dem Anschlussabstandshalter (730) ausgebildet ist, und einen Spalt, der zwischen der Innenfläche des Anschlusslochs (300a) und dem Anschlussabstandshalter (730) ausgebildet ist, austritt.

16. Batteriepack aufweisend das Batteriemodul nach einem der Ansprüche 1 bis 15.

17. Fahrzeug aufweisend das Batteriemodul nach einem der Ansprüche 1 bis 15.

## Revendications

1. Module de batterie, comprenant :
un sous-module (100) comprenant un ensemble d'empilement de cellules (110) possédant une pluralité de cellules de batterie (111) ;
un boîtier de module (200) configuré pour accueillir le sous-module (100) ;
une plaque de scellement antérieure (300) configurée pour couvrir une ouverture sur un côté longitudinal du boîtier de module (200), et possédant une entrée (P1) par laquelle un liquide de refroidissement est introduit ;
une plaque de scellement postérieure (400) configurée pour couvrir une ouverture sur l'autre côté longitudinal du boîtier de module (200), et possédant une sortie (P2) par laquelle le liquide de refroidissement est évacué ; et
une paire d'ensemble de bornes (700) comprenant une borne extérieure (710) située sur un côté extérieur de la plaque de scellement antérieure (300), un goujon (720) inséré dans un orifice de borne (300a) pratiqué dans la plaque de scellement antérieure (300), et une entretoise de borne (730) intercalée entre une surface intérieure de l'orifice de borne (300a) et le goujon (720),
le goujon (720) étant boulonné sur l'entretoise de borne (730) de sorte que la borne extérieure (710) se place en contact étroit avec l'entretoise de borne (730).

2. Module de batterie selon la revendication 1, le sous-module (100) comprenant :
un ensemble de cadre de barre omnibus antérieur (120A) couplé à un côté longitudinal de l'ensemble d'empilement de cellules (110) ; et
un ensemble de cadre de barre omnibus postérieur (120B) couplé à l'autre côté longitudinal de l'ensemble d'empilement de cellules (110).

3. Module de batterie selon la revendication 2, l'ensemble de cadre de barre omnibus antérieur (120A) comprenant :
un cadre de barre omnibus (121) ;
une pluralité de barres omnibus (122) fixées sur le cadre de barre omnibus (121), et connectées à un conducteur d'électrode (111a) de la cellule de batterie (111) ; et
une paire de bornes intérieures (123) fixées sur le cadre de barre omnibus (121), et connectées à un conducteur d'électrode (111a) d'une cellule de batterie (111) située sur un côté extérieur parmi les cellules de batterie (111) comprises dans l'ensemble d'empilement de cellules (110).

4. Module de batterie selon la revendication 3, l'ensemble de borne (700) comprenant en outre un écrou de serrage (740) boulonné sur le goujon (720) de sorte que la borne extérieure (710) se place en étroit contact avec l'entretoise de borne (730).

5. Module de batterie selon la revendication 4,
le goujon (720) étant couplé à la borne intérieure (710) ; et
l'entretoise de borne (730) étant boulonnée sur le goujon (720).

6. Module de batterie selon la revendication 4,
la plaque de scellement antérieure (300) comprenant une partie étagée (S) formée sur la surface intérieure de l'orifice de borne (300a), et
l'entretoise de borne (730) comprenant une partie de bride d'entretoise (731) formée dans une position correspondant à la partie étagée (S).

7. Module de batterie selon la revendication 6, un élément d'étanchéité (G) étant intercalé entre la partie étagée (S) et la partie de bride d'entretoise (731).

8. Module de batterie comprenant :
un sous-module (100) comprenant un ensemble d'empilement de cellules (110) possédant une pluralité de cellules de batterie (111) ;
un boîtier de module (200) configuré pour accueillir le sous-module (100) ;
une plaque de scellement antérieure (300) configurée pour couvrir une ouverture sur un côté longitudinal du boîtier de module (200), et possédant une entrée (P1) par laquelle un liquide de refroidissement est introduit ;
une plaque de scellement postérieure (400) configurée pour couvrir une ouverture sur l'autre côté longitudinal du boîtier de module (200), et possédant une sortie (P2) par laquelle le liquide de refroidissement est évacué ; et
le sous-module (100) comprenant :
une paire d'ensemble de bornes (700) comprenant une borne extérieure (710) située sur un côté extérieur de la plaque de scellement antérieure (300), un goujon (720) inséré dans un orifice de borne (300a) pratiqué dans la plaque de scellement antérieure (300), et une entretoise de borne (730) intercalée entre une surface intérieure de l'orifice de borne (300a) et le goujon (720),
un ensemble de cadre de barre omnibus antérieur (120A) couplé à un côté longitudinal de l'ensemble d'empilement de cellules (110) ; et
un ensemble de cadre de barre omnibus postérieur (120B) couplé à l'autre côté longitudinal de l'ensemble d'empilement de cellules (110).
l'ensemble de cadre de barre omnibus antérieur (120A) comprenant :
un cadre de barre omnibus (121) ;
une pluralité de barres omnibus (122) fixées sur le cadre de barre omnibus (121), et connectées à un conducteur d'électrode (111a) de la cellule de batterie (111) ; et
une paire de bornes intérieures (123) fixées sur le cadre de barre omnibus (121), et connectées à un conducteur d'électrode (111a) d'une cellule de batterie (111) située sur un côté extérieur parmi les cellules de batterie (111) comprises dans l'ensemble d'empilement de cellules (110),
le goujon (720) passant à travers la borne intérieure (123),
le goujon (720) comprenant une partie de bride de goujon (721) formée sur un bout de celui-ci, et
l'ensemble de borne (700) comprenant en outre un écrou de serrage (740) boulonné sur le goujon (720) de sorte que la borne extérieure (710) se place en étroit contact avec l'entretoise de borne (730).

9. Module de batterie selon la revendication 8, un élément d'étanchéité (G) étant intercalé dans au moins un emplacement entre la partie de bride de goujon (721) et la borne intérieure (123), et entre la surface intérieure de l'orifice de borne (300a) et l'entretoise de borne (730).

10. Module de batterie selon la revendication 3,
l'entretoise de borne (730) étant couplée à la borne intérieure (123), et
le goujon (720) étant boulonné à l'entretoise de borne (730) de sorte que la borne extérieure (710) se place en étroit contact avec l'entretoise de borne (730).

11. Module de batterie selon la revendication 10, un élément d'étanchéité (G) étant intercalé entre la surface intérieure de l'orifice de borne (300a) et l'entretoise de borne (730).

12. Module de batterie selon la revendication 3,
l'entretoise de borne (730) étant couplée à la borne intérieure (123), et
le goujon (720) étant inséré dans une cannelure de goujon (730a) formée dans une partie centrale de l'entretoise de borne (730) et boulonné à l'entretoise de borne (730) de sorte que la borne extérieure (710) se place en étroit contact avec l'entretoise de borne (730).

13. Module de batterie selon la revendication 12,
la plaque de scellement antérieure (300) comprenant une partie étagée (S) formée sur la surface intérieure de l'orifice de borne (300a), et
l'entretoise de borne (730) comprenant une partie de bride d'entretoise (731) formée dans une position correspondant à la partie étagée (S).

14. Module de batterie selon la revendication 13, un élément d'étanchéité (G) étant intercalé entre la partie étagée (S) et la partie de bride d'entretoise (731).

15. Module de batterie selon la revendication 1, l'ensemble de borne (700) possédant une structure de prévention de fuites de sorte que le liquide de refroidissement isolant introduit dans le module de batterie ne fuie pas à travers un écart formé entre le goujon (720) et l'entretoise de borne (730), et un écart formé entre la surface intérieure de l'orifice de borne (300a) et l'entretoise de borne (730).

16. Bloc-batterie comprenant le module de batterie selon une quelconque des revendications 1 à 15.

17. Véhicule comprenant le module de batterie selon une quelconque des revendications 1 à 15.
